# EUROPEAN PATENT SPECIFICATION

(11) **EP 3 798 264 B1**
(45) Date of publication and mention of the grant of the patent: **06.07.2022**
(21) Application number: 19200087.5
(22) Date of filing: 27.09.2019
(51) Int. Cl.: C08L 69/00, C08L 83/10, C08L 27/18, C08K 7/14, C08K 5/49, C08K 5/52, C08G 64/04, C08G 63/64, C08G 64/12

(54) **REINFORCED FLAME RETARDANT POLYCARBONATE COMPOSITIONS WITH NANOSTRUCTURED FLUOROPOLYMER FOR THIN WALL APPLICATIONS**
VERSTÄRKTE FLAMMHEMMENDE POLYCARBONATZUSAMMENSETZUNGEN MIT NANOSTRUKTURIERTEM FLUORPOLYMER FÜR DÜNNWANDANWENDUNGEN
COMPOSITIONS DE POLYCARBONATE IGNIFUGES RENFORCÉES PAR UN FLUOROPOLYMÈRE NANOSTRUCTURÉ POUR DES APPLICATIONS À PAROI MINCE

(43) Date of publication of application: 31.03.2021
(73) Proprietor: SHPP Global Technologies B.V., 4612 PX Bergen op Zoom (NL)
(72) Inventor: Schwartz, Erik, Bergen op Zoom (NL); Goossens, Johannes Martinus Dina, Bergen op Zoom (NL); Goossens, Johannes Gerardus Petrus, Bergen op Zoom (NL); Micciche, Fabrizio, Bergen op Zoom (NL); Ramakrishnan, Vaidyanath, Bergen op Zoom (NL); Van de Grampel, Robert Dirk, Bergen op Zoom (NL)
(74) Representative: Balder IP Law, S.L.

(56) References cited:
- WO-A1-2013/067684
- WO-A1-2016/174592
- US-B2- 10 336 902
- DATABASE WPI Week 201559 Thomson Scientific, London, GB; AN 2015-48543R XP002797912, & CN 104 693 760 A (QINGDAO TONGCHUANG ENERGY CONSERVATION &) 10 June 2015 (2015-06-10)

## Description

### BACKGROUND

This disclosure relates to polycarbonate compositions, and in particular to reinforced polycarbonate compositions, methods of manufacture, and uses thereof.

Polycarbonates are useful in the manufacture of articles and components for a wide range of applications, from automotive parts to electronic appliances. Reinforced polycarbonate compositions, i.e., polycarbonate compositions comprising reinforcing fillers, can provide additional strength and other advantageous properties. Because of their broad use, particularly in electronics, it is desirable to provide reinforced polycarbonate compositions with improved flame retardance. WO2016/174592 A1 discloses flame-retardant resin compositions comprising polycarbonate, polysiloxane-polycarbonate copolymer, glass fibers, halogenated phenoxyphosphazene flame retardant, and TSAN (polytetrafluoroethylene, 50 weight percent, encapsulated in poly(styrene-co-acrylonitrile)), that display a V-0 rating at thicknesses of 0.6, 0.8 and 1 millimetre, respectively, when tested as per a UL-94 protocol.

There accordingly remains a need in the art for reinforced polycarbonate compositions having high flame retardance. It would be a further advantage if the compositions had improved flammability ratings and impact resistance at very low thicknesses.

### BRIEF DESCRIPTION

The above-described and other deficiencies of the art are met by a reinforced polycarbonate composition comprising: 10-90 wt% of a polycarbonate component comprising a homopolycarbonate having a weight average molecular weight from 15,000-40,000 grams/mole, as measured via gel permeation chromatography using bisphenol A homopolycarbonate standards; a high heat copolycarbonate having a glass transition temperature of 170 °C or higher determined per ASTM D3418 with a 20 °C per minute heating rate; or a combination thereof; 5-45 wt% of a poly(carbonate-siloxane); 0.001-1.0 wt% of a nanostructured fluoropolymer; 5-45 wt% of a reinforcing fiber, preferably glass fibers; an organophosphorus flame retardant present in an amount effective to provide 0.1-1.5 wt% of added phosphorous, based on the total weight of the flame retardant; optionally, 0.1-10.0 wt% of an additive composition, wherein each amount is based on the total weight of the reinforced polycarbonate composition, which sums to 100 wt%, wherein a molded sample of the reinforced polycarbonate composition has a UL 94 rating of V0 at a thickness of 0.8 mm, or at a thickness of 0.6 mm, or at a thickness of 0.4 mm, and a heat distortion temperature of at least 120 °C as measured according to the ISO-75 standard at 1.8 megapascal.

In another aspect, a method of manufacture comprises combining the above-described components to form a reinforced polycarbonate composition.

In yet another aspect, an article comprises the above-described reinforced polycarbonate composition.

In still another aspect, a method of manufacture of an article comprises molding, extruding, or shaping the above-described reinforced polycarbonate composition into an article.

The above described and other features are exemplified by the following drawings, detailed description, examples, and claims.

### DETAILED DESCRIPTION

There is a need for thin-walled articles made from reinforced, flame retardant polycarbonate compositions having high heat resistance, while maintaining mechanical properties such as flexural strength and flexural modulus. In particular, compositions for thin-walled articles are needed having a heat distortion temperature (HDT) of greater than 120 °C and a UL-94 flammability rating of V0 at a 0.8 mm (mm) thickness, V0 at a 0.6 mm thickness, or V0 at a 0.4 mm thickness. In addition, there is an increasing demand for more environmentally friendly polycarbonate compositions without bromine and chlorine. Some commercially available chlorine-free and bromine-free polycarbonate compositions that include flame retardants such as Rimar salt or poly(tetrafluoroethylene) have good heat resistance and impact properties, but do not possess adequate flammability ratings at low thicknesses, less than 1 mm, for example. Other commercially available polycarbonate compositions that include chlorine-free and bromine-free flame retardants possess good flammability ratings at low thicknesses, but these materials have insufficient heat resistance for some high heat applications. For example, it is known that phosphonate or phosphazene flame retardants can decrease the heat resistance of polycarbonate compositions.

Surprisingly and unexpectedly, the inventors hereof have discovered reinforced polycarbonate compositions having high heat resistance, flammability ratings of V0 at a thickness of 0.8 mm, or 0.6 mm, or 0.4 mm, and good impact properties. These compositions comprise a polycarbonate component comprising a homopolycarbonate, a high heat copolycarbonate, or a combination thereof; a poly(carbonate-siloxane); an organophosphorus flame retardant; a nanostructured fluoropolymer; and reinforcing fibers.

A molded sample of the reinforced polycarbonate composition has a heat distortion temperature of at least 120 °C measured according to the ISO-75 standard and a load of 1.8 megapascals and flame test rating of V0, as measured according to UL-94 at a thickness of 0.8 mm, or at a thickness of 0.6 mm, at a thickness of 0.4 mm, or a combination thereof.

The individual components of the reinforced polycarbonate compositions are described in further detail below.

"Polycarbonate" as used herein means a polymer having repeating structural carbonate units of formula (1) 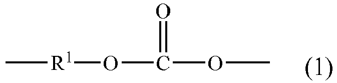 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of the formula

HO-A¹-Y¹-A²-OH

wherein each of A¹ and A² is a monocyclic divalent aromatic group and Y¹ is a single bond or a bridging group having one or more atoms that separate A¹ from A². In an aspect, one atom separates A¹ from A². Specifically, each R¹ can be derived from a bisphenol of formula (2) 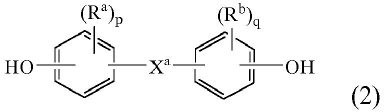 wherein R^{a} and R^{b} are each independently a halogen, C₁₋₁₂ alkoxy, or C₁₋₁₂ alkyl, and p and q are each independently integers of 0-4. It will be understood that when p or q is less than 4, the valence of each carbon of the ring is filled by hydrogen. Also in formula (2), X^{a} is a C₁₋₆₀ bridging group connecting the two hydroxy-substituted aromatic groups, where the bridging group and the hydroxy substituent of each C₆ arylene group are disposed ortho, meta, or para (specifically para) to each other on the C₆ arylene group. In an aspect, the bridging group X^{a} is single bond, -O-, -S-, -S(O)-, -S(O)₂-, -C(O)-, or a C₁₋₆₀ organic group. The C₁₋₆₀ organic bridging group can be cyclic or acyclic, aromatic or non-aromatic, and can further comprise heteroatoms such as halogens, oxygen, nitrogen, sulfur, silicon, or phosphorous. The C₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, specifically methyl, disposed meta to the hydroxy group on each arylene group.

The reinforced polycarbonate compositions include polycarbonate component comprising a homopolycarbonate (wherein each R¹ in the polymer is the same), a high heat copolycarbonate, or a combination thereof, and a poly(carbonate-siloxane). In an aspect, the homopolycarbonate in the reinforced composition is derived from a bisphenol of formula (2), preferably bisphenol A, in which each of A¹ and A² is p-phenylene and Y¹ is isopropylidene in formula (2). The homopolycarbonate can have an intrinsic viscosity, as determined in chloroform at 25°C, of 0.3-1.5 deciliters per gram (dl/gm), preferably 0.45-1.0 dl/gm. The homopolycarbonate can have a weight average molecular weight (Mw) of 15,000-40,000 grams per mol (g/mol), as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute. In some aspects, the homopolycarbonate is a bisphenol A homopolycarbonate having an Mw of 18,000-35,000 grams/mole, preferably 20,000-25,000 g/mol; or a bisphenol A homopolycarbonate having a weight average molecular weight of 25,000-35,000 g/mol, preferably 27,000-32,000 g/mol; or a combination thereof, each as measured as described above.

The reinforced polycarbonate compositions further include a high heat copolycarbonate, which as used herein means a polycarbonate having a glass transition temperature (Tg) of 170 °C or higher, determined per ASTM D3418 with a 20 °C/min heating rate. The high heat copolycarbonate can be an aromatic poly(ester-carbonate). Such polycarbonates further contain, in addition to recurring carbonate units of formula (1), repeating ester units of formula (3) 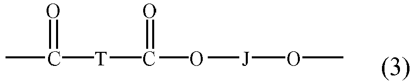 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups can be used. The polyester units can be branched or linear.

In an aspect, J is derived from a bisphenol of formula (2), e.g., bisphenol A. In an aspect, a portion of the groups J, for example up to 20 mole percent (mol%) can be an aromatic dihydroxy compound, e.g., resorcinol, or C₂₋₃₀ alkylene group having a straight chain, branched chain, or cyclic (including polycyclic) structure, for example ethylene, n-propylene, i-propylene, 1,4-butylene, 1,4-cyclohexylene, or 1,4-methylenecyclohexane. Preferably, all J groups are bisphenol groups of formula (2).

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid comprises a combination of isophthalic acid and terephthalic acid wherein the weight ratio of isophthalic acid to terephthalic acid is 91:9 to 2:98. A portion of the groups T, for example up to 20 mol%, can be aliphatic, for example derived from 1,4-cyclohexane dicarboxylic acid. Preferably all T groups are aromatic.

The molar ratio of ester units to carbonate units in the polycarbonates can vary broadly, for example 1:99 to 99:1, preferably 10:90 to 90:10, more preferably 25:75 to 75:25, or 2:98 to 15:85, depending on the desired properties of the final composition.

Specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (4a) 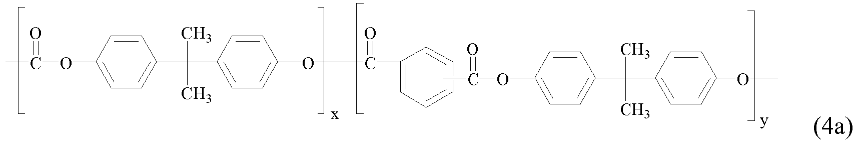 wherein x and y represent the wt% of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. Copolymers of formula (5) comprising 35-45 wt% of carbonate units and 55-65 wt% of ester units, wherein the ester units have a molar ratio of isophthalate to terephthalate of 45:55 to 55:45 are often referred to as poly(carbonate-ester)s (PCE). Copolymers comprising 15-25 wt% of carbonate units and 75-85 wt% of ester units, wherein the ester units have a molar ratio of isophthalate to terephthalate from 98:2 to 88:12 are often referred to as poly(phthalate-carbonate)s (PPC).

The high heat poly(ester-carbonate)s can have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a crosslinked styrene-divinyl benzene column, at a sample concentration of 1 milligram per milliliter, and as calibrated with bisphenol A homopolycarbonate standards. Samples are eluted at a flow rate of 1.0 ml/min with methylene chloride as the eluent.

Another type of high heat copolycarbonate that can be used includes a high heat carbonate group, optionally together with a low heat carbonate group. A combination of different high heat groups or low heat groups can be used.

The low heat carbonate group can be derived from bisphenols of formula (2) as described above wherein X^{a} is a C₁₋₁₈ bridging group. For example, X^{a} can be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used in the manufacture of the low heat monomer units are described, for example, in WO 2013/175448 A1, US 2014/0295363, and WO 2014/072923. In an aspect, the low heat carbonate group is derived from bisphenol A, which provides the low heat group of the following formula.

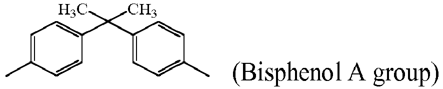

The high heat carbonate group is derived from a high heat bisphenol monomer. As used herein, a high heat bisphenol monomer is a monomer where the corresponding homopolycarbonate of the monomer has a glass transition temperature (Tg) of 170°C or higher, determined per ASTM D3418 with a 20 °C/min heating rate. Examples of such high heat bisphenol groups include groups of formulas (6) to (12) 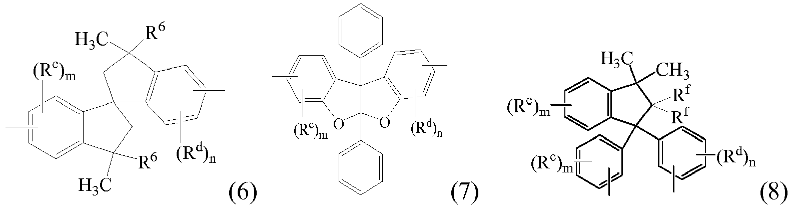 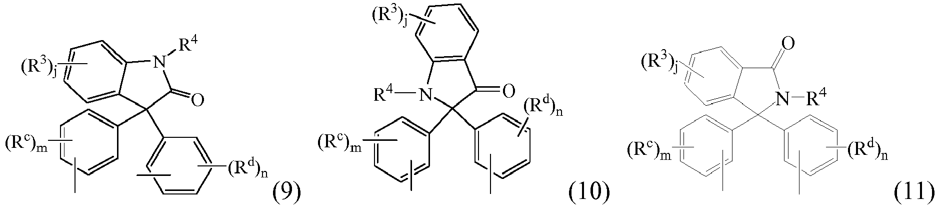 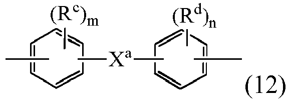 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, each R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{h})(R^{g})- wherein R^{h} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}- wherein Q¹ and Q² are each independently a C₁₋₃ alkylene, G is a C₃₋₁₀ cycloalkylene, x is 0 or 1, and y is 1, and j, m and n are each independently 0-4, or 0 or 1. A combination of high heat bisphenol groups can be used.

In an aspect in formulas (6)-(12), R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}- group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat bisphenol groups are shown below 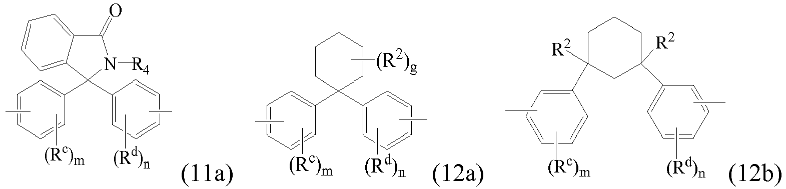 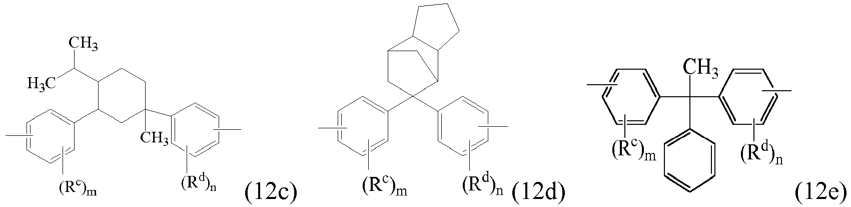 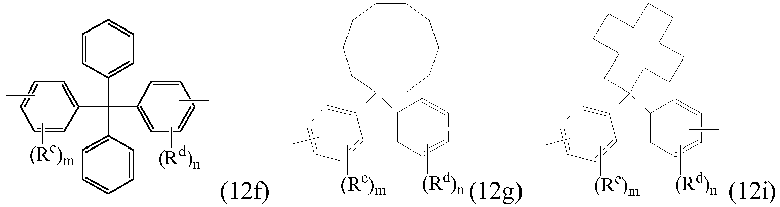 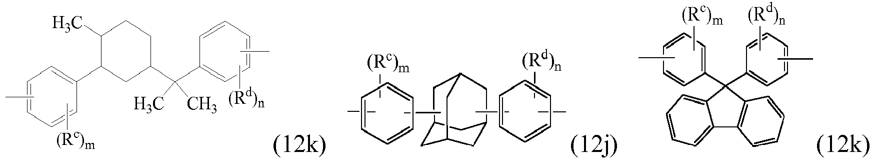 wherein R^{c} and R^{d} are the same as defined for formulas (6) to (12), each R² is independently C₁₋₄ alkyl, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat bisphenol group is preferably of formula (1 1a-2) or (12a-2) 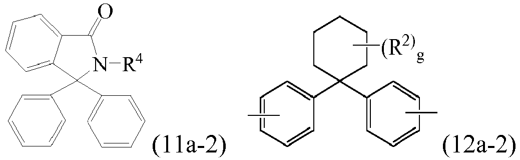 wherein R⁴ is methyl or phenyl, each R² is methyl, and g is 1-4. Preferably, the high heat bisphenol group is derived from N-phenyl phenolphthalein bisphenol (PPPBP, also known as 2-phenyl-3,3'-bis(4-hydroxyphenyl)) or from 1,1-bis(4-hydroxyphenyl)-3,3,5-trimethylcyclohexane (BP-TMC).

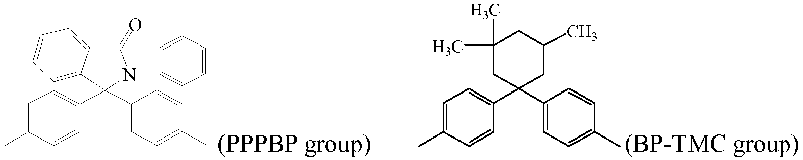

This high heat copolycarbonates can include 0-90 mol%, or 10-80 mol% of low heat aromatic carbonate units, preferably bisphenol A carbonate units; and 10-100 mol%, preferably 20-90 mol% of high heat aromatic carbonate units, even more preferably wherein the high heat carbonate units are derived from 1,1-bis(4-hydroxyphenyl)-3,3,5-trimethylcyclohexane, , 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, wherein each amount is based on the total moles of the carbonate units, which sums to 100 mol%.

In certain aspects, the high heat copolycarbonate includes 60-80 mol% of bisphenol A carbonate units and 20-40 mol% of high heat aromatic carbonate units derived from 1,1-bis(4-hydroxyphenyl)-3,3,5-trimethyl-cyclohexane, N-phenyl phenolphthalein bisphenol, or a combination thereof, wherein each amount is based on the total moles of the carbonate units, which sums to 100 mol%.

The reinforced polycarbonate composition includes 10-90 wt% of a polycarbonate component comprising a homopolycarbonate having a weight average molecular weight from 15,000-40,000 grams/mole, as measured via gel permeation chromatography using bisphenol A homopolycarbonate standards; a high heat copolycarbonate having a glass transition temperature of 170 °C or higher determined per ASTM D3418 with a 20 °C per minute heating rate; or a combination thereof. When present, the amount of homopolycarbonate can range from 10-90 wt%, or 30-60 wt%, or 30-40 wt% based on the total weight of the reinforced polycarbonate composition. When present, the amount of high heat copolycarbonate can range from 10-90 wt%, or 10-40 wt%, or 20-40 wt% based on the total weight of the reinforced polycarbonate composition. In an aspect, the homopolycarbonate is absent. In another aspect, the high heat copolycarbonate is absent.

The high heat copolycarbonates comprising high heat carbonate units can have an Mw of 10,000-50,000 g/mol, or 16,000-300,000 g/mol, as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute.

The reinforced polycarbonate composition comprises a poly(carbonate-siloxane) copolymer. The polysiloxane blocks comprise repeating diorganosiloxane units as in formula (13) 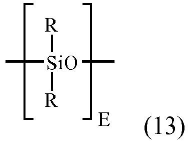 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (13) can vary widely depending on the type and relative amount of each component in the reinforced polycarbonate composition, the desired properties of the composition, and like considerations. Generally, E has an average value of 2-1,000, specifically 2-500, 2-200, or 2-125, 5-80, or 10-70. In an aspect, E has an average value of 10-80 or 10-40, and in still another aspect, E has an average value of 40-80, or 40-70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

In an aspect, the polysiloxane blocks are of formula (14) 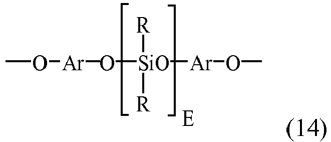 wherein E and R are as defined in formula (13); and Ar can be the same or different, and is a substituted or unsubstituted C₆₋₃₀ arylene, wherein the bonds are directly connected to an aromatic moiety. Ar groups in formula (14) can be the same or different, and can be derived from a C₆₋₃₀ dihydroxyarylene compound, for example a bisphenol compound of formula (2). Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, the polysiloxane blocks are of formula (15) 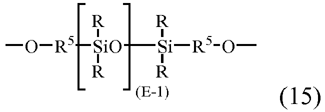 wherein E and R are as defined in formula (13), and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (16): 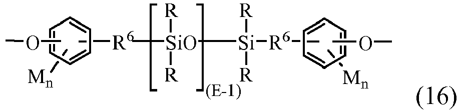 wherein R and E are as defined above. R⁶ in formula (16) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formulas 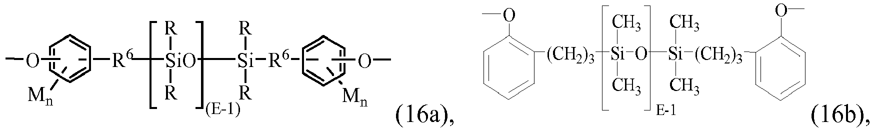 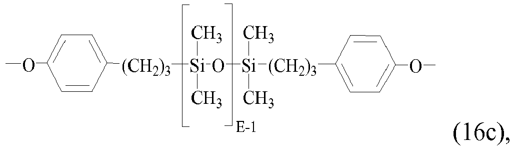 or a combination thereof, wherein E has an average value of 2-200, 2-125, 5-125, 5-100, 5-50, 20-80, or 5-20.

The poly(carbonate-siloxane)s can comprise 50-99 wt% of carbonate units and 1-50 wt% siloxane units. Within this range, the poly(carbonate-siloxane) can comprise 70-98 wt%, more specifically 75-97 wt% of carbonate units and 2-30 wt%, more specifically 3-25 wt% siloxane units. The poly(carbonate-siloxane) can be present from 5-45 wt%, or 5-30 wt%, based on the total weight of the reinforced polycarbonate composition.

The poly(carbonate-siloxane)s can have an Mw of 2,000-100,000 g/mol, specifically 5,000-50,000 g/mol as measured by gel permeation chromatography using a crosslinked styrene-divinyl benzene column, at a sample concentration of 1 milligram per milliliter, and as calibrated with bisphenol A homopolycarbonate standards. The poly(carbonate-siloxane)s can have a melt volume flow rate, measured at 300°C/1.2 kg, of 1-50 cubic centimeters per 10 minutes (cc/10 min), specifically 2-30 cc/10 min. Combinations of poly(carbonate-siloxane)s of different flow properties can be used to achieve the overall desired flow property.

The polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt%. Combinations comprising linear polycarbonates and branched polycarbonates can be used.

The reinforced polycarbonate compositions include an organophosphorus flame retardant. The organophosphorus flame retardant can be phosphazene, phosphate, phosphite, phosphonate, phosphinate, phosphine oxide, phosphine, or a combination thereof, preferably comprising an aromatic group.

The organophosphorus flame retardant in the reinforced polycarbonate compositions can include organophosphates and phosphazenes. The organophosphates can be monomeric or oligomeric, and can have the structure of formula (17) 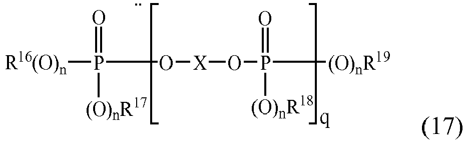 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl, and X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, R¹⁹, and X is an aromatic group. In some aspects R¹⁶, R¹⁷, R¹⁸, and R¹⁹ are each independently C₁₋₄ alkyl, naphthyl, phenyl(C₁₋₄ alkylene), or aryl groups optionally substituted by C₁₋₄ alkyl. Specific aryl moieties are cresyl, phenyl, xylenyl, propylphenyl, or butylphenyl. In some aspects X in formula (17) is a mono- or poly-nuclear aromatic C₆₋₃₀ moiety derived from a diphenol. Further in formula (17), n is each independently 0 or 1; in some aspects n is equal to 1. Also in formula (17), q is from 0.5-30, from 0.8-15, from 1-5, or from 1-2. Specifically, X can be represented by the following divalent groups (18) or a combination thereof. 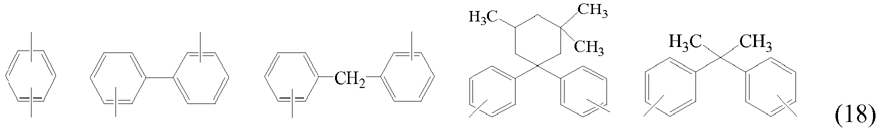 preferably in formula (17), each of R¹⁶, R¹⁷, R¹⁸, and R¹⁹ can be aromatic, i.e., phenyl, n is 1, and q is 1-5, specifically 1-2, and X is of formula (18).

Specific organophosphorus flame retardants are represented by formula (17a): 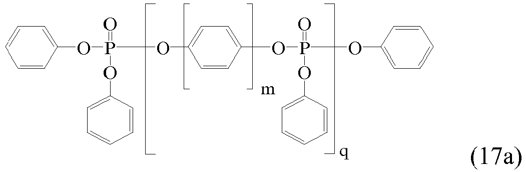 wherein m is 1 or 2, and q is as described in formula (17).

Commercially available organophosphorus flame retardants include an oligomeric phosphate ester having a phosphorous content of 10.7 wt%, a specific gravity of 1.3, and a melting point of 101-108 °C, available as Sol-DP from FYROLFLEX and a phosphate ester of formula (17b) 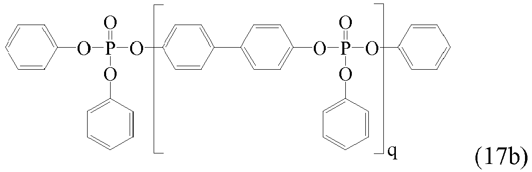 having a phosphorous content 9.5 wt%, available as FP 800 from CEL-SPAN.

Phosphazenes (19) and cyclic phosphazenes (21) 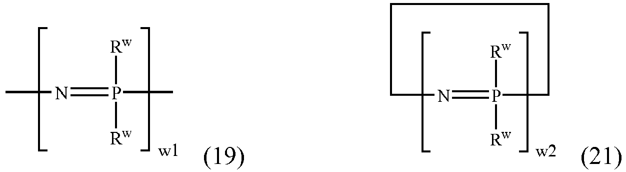 in particular can be used, wherein w1 is 3-10,000 and w2 is 3-25, specifically 3-7, and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. In some aspects, each R^{w} is independently a C₁₋₁₂ alkyl, C₂₋₁₂ alkenyl, C₁₋₁₂ alkoxy, C₆₋₁₂ aryl, C₆₋₁₂ aryloxy, or a polyoxy(C₁₋₆ alkylene) group. Any given R^{w} can further be a crosslink to another phosphazene group. Exemplary crosslinks include bisphenol groups, for example bisphenol A groups. The organophosphorus flame retardant can include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorous-Nitrogen Compounds" Academic Press (1972), and J. E. Mark et al., "Inorganic Polymers" Prentice-Hall International, Inc. (1992).

The organophosphorus flame retardant is present in an amount effective to provide from 0.1-1.5 wt%, or 0.5-1.0 wt%, or 0.7-0.9 wt% of added phosphorous, based on the weight of the organophosphorus flame retardant. Accordingly, depending on the particular flame retardant used, the reinforced polycarbonate compositions can be from 1-10 wt%, or from greater than 5-10 wt%, or from 4-8 wt%, of the organophosphorus flame retardant, each based on total weight of the reinforced polycarbonate composition, which sums to 100 wt%.

A nanostructured fluoropolymer is present in the reinforced polycarbonate composition, for example a nanostructured fluoropolymer such as polytetrafluoroethylene (PTFE). As used herein, the term "nanostructure" refers to a material in which one dimension of the material is equal to or less than 1000 nm (e.g., one dimension is 1 to 1000 nm in size). In a particular aspect, the nanostructure includes at least two dimensions that are equal to or less than 1000 nm (e.g., a first dimension is 1 to 1000 nm in size and a second dimension is 1 to 1000 nm in size). In another aspect, the nanostructure includes three dimensions that are equal to or less than 1000 nm (e.g., a first dimension is 1 to 1000 nm in size, a second dimension is 1 to 1000 nm in size, and a third dimension is 1 to 1000 nm in size). The shape of the nanostructure can be of a wire, a particle (e.g., having a substantially spherical shape), a rod, a tetrapod, a hyper-branched structure, a tube, a cube, or mixtures thereof. The nanostructures can be monodisperse, where all particles are of the same size with little variation, or polydisperse, where the particles have a range of sizes and are averaged.

The nanostructured fluoropolymer can be prepared in a masterbatch, for example, during extrusion of a polymer, a filler, or both simultaneously. Methods for the preparation of the nanostructured fluoropolymer are described on WO 2018122747. The extruded nanostructured fluoropolymer masterbatch can have a low shear viscosity between 800 to 4000 Pa.s (0.1 rad/s) and a tan delta from 5 to 10 as measured according to ISO 6721. The viscosity can be from 800 to 950, or 1000 to 2000, or 1500 to 3000, or 2500 to 4000 Pa.s. The tan delta maximum can be from 5 to 7, or 5 to 8.5 or 6 to 9, or 7 to 10.

Fluoropolymers suitable as nanostructured fluoropolymers are described in, e.g., US 7,557,154 and include but are not limited to homopolymers and copolymers that comprise structural units derived from one or more fluorinated alpha-olefin monomers, that is, an alpha-olefin monomer that include a fluorine atom in place of a hydrogen atom. In one aspect the fluoropolymer comprises structural units derived from two or more fluorinated alpha-olefin, for example tetrafluoroethylene, hexafluoroethylene, and the like. In another aspect, the fluoropolymer comprises structural units derived from a fluorinated alpha-olefin monomer and a non-fluorinated monoethylenically unsaturated monomers that are copolymerizable with the fluorinated monomers, for example alpha-monoethylenically unsaturated copolymerizable monomers such as ethylene, propylene, butene, acrylate monomers (e.g., methyl methacrylate and butyl acrylate), vinyl ethers, (e.g., cyclohexyl vinyl ether, ethyl vinyl ether, n-butyl vinyl ether, vinyl esters) and the like. Specific examples of fluoropolymers include polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, and ethylene chlorotrifluoroethylene. Combinations of fluoropolymers may also be used. Poly(tetrafluroroethylene) (PTFE) is considered especially suitable.

As is known, fluoropolymers are available in a variety of forms, including powders, emulsions, dispersions, agglomerations, and the like. "Dispersion" (also called "emulsion") fluoropolymers are generally manufactured by dispersion or emulsion, and may comprise 25 to 60 wt%, or about 25 wt% to 60 wt%, fluoropolymer in water, stabilized with a surfactant, wherein the fluoropolymer particles are 0.1-0.3 µm. "Fine powder" (or "coagulated dispersion") fluoropolymers may be made by coagulation and drying of dispersion-manufactured fluoropolymers. Fine powder fluoropolymers are generally manufactured to have a particle size of 400-500 µm. "Granular" fluoropolymers may be made by a suspension method, and are generally manufactured in two different particle size ranges, including a median particle size of 30-40 µm and a high bulk density product exhibiting a median particle size of 400-500 µm. Pellets of fluoropolymer may also be obtained and cryogenically ground to exhibit the desired particle size.

The nanostructured fluoropolymer is present from 0.001-1.0 wt%, or 0.001-0.5 wt%, or 0.01-0.5 wt%, or 0.1-0.5 wt% or 0.1-0.4 wt%, or 0.15-0.4 wt%, or 0.15-0.30 wt%, or 0.2-0.5 wt% or 0.2-0.4 wt%, based on the total weight of the reinforced polycarbonate composition.

The nanostructured fluoropolymer can be encapsulated by an encapsulating polymer. A nanostructured fluoropolymer may be at least partially encapsulated by an encapsulating polymer that may be the same as or different from the nanostructured fluoropolymer. Without being bound by theory, it is believed that encapsulation may aid in the distribution of the fluoropolymer within the matrix, or compatibilize the nanostructured fluoropolymer with the composition.

Specific encapsulating polymers include polystyrene, copolymers of polystyrene, poly(alpha-methylstyrene), poly(alpha-ethylstyrene), poly(alpha-propylstyrene), poly(alpha-butylstyrene), poly(p-methylstyrene), polyacrylonitrile, polymethacrylonitrile, poly(methyl acrylate), poly(ethyl acrylate), poly(propyl acrylate), and poly(butyl acrylate), poly(methyl methacrylate), poly(ethyl methacrylate), poly(propyl methacrylate), poly(butyl methacrylate); polybutadiene, copolymers of polybutadiene with propylene, poly(vinyl acetate), poly(vinyl chloride), poly(vinylidene chloride), poly(vinylidene fluoride), poly(vinyl alcohols), acrylonitrile-butadiene copolymer rubber, acrylonitrile-butadiene-styrene (ABS), poly(C₄₋₈ alkyl acrylate) rubbers, styrene-butadiene rubbers (SBR), EPDM rubbers, silicon rubber, or a combination thereof.

In some aspects, the encapsulating polymer comprises a styrene-acrylonitrile copolymer, an acrylonitrile-butadiene-styrene copolymer, alpha-alkyl-styrene-acrylonitrile copolymer, an alpha-methylstyrene-acrylonitrile copolymer, a styrene-butadiene rubber, a methyl methacrylate copolymer, or a combination thereof. In another aspect, the encapsulating polymer comprises SAN, ABS copolymers, alpha-(C₁₋₃)alkyl-styrene-acrylonitrile copolymers, alpha-methylstyrene-acrylonitrile (AMSAN) copolymers, SBR, and combinations comprising at least one of the foregoing. In yet another aspect the encapsulating polymer is SAN or AMSAN. In an aspect, the nanostructured fluoropolymer encapsulated by an encapsulating polymer is styrene-acrylonitrile encapsulated nanostructured polytetrafluoroethylene.

In an aspect, the encapsulated nanostructured fluoropolymer comprises 10-90 wt%, 20-80 wt%, or 40-60 wt% of the fluoropolymer and 90-10 wt%, or 80-20 wt%, or 60-40 wt% of the encapsulating polymer, based on the total weight of the encapsulated polymer.

In an aspect, the reinforced polycarbonate composition is substantially free of a fluoropolymer encapsulated by an encapsulating polymer, wherein the fluoropolymer is not nanostructured, such as, for example, styrene-acrylonitrile (SAN) encapsulated poly(tetrafluoroethylene) (i.e., TSAN). Encapsulated fluoropolymers can be made by polymerizing the encapsulating polymer in the presence of the fluoropolymer, for example an aqueous dispersion.

The reinforced polycarbonate composition includes a reinforcing fiber (including continuous and chopped fibers) such as asbestos, carbon fibers, glass fibers, such as E, A, C, ECR, R, S, D, or NE glasses, or the like. In addition, the reinforcing fibers can be provided in the form of monofilament or multifilament fibers and can be used individually or in combination with other types of fiber, through, for example, co-weaving or core/sheath, side-by-side, orange-type or matrix and nanostructure constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Preferably the reinforcing fiber is a glass fiber.

The reinforcing fibers can be of any cross-sectional shape, for example round, square, ovoid, or irregular. The reinforcing fibers can have an average largest diameter from 1 micrometer to 1 mm, or from 1-500 µm. The reinforcing fibers can be supplied in the form of, for example, individual fibers, rovings, woven fibrous reinforcements, such as 0-90 degree fabrics or the like; non-woven fibrous reinforcements such as continuous strand mat, chopped strand mat, tissues, papers, felts, or the like; or three-dimensional reinforcements such as braids. The reinforcing fiber can be present from 5-45 wt%, 5-30 wt%, or from 5-20 wt%, or from 5-15 wt%, or from 5-10 wt% based on the total weight of the reinforced polycarbonate composition, which sums to 100 wt%.

The reinforced polycarbonate composition can further comprise an additive composition that can include various additives ordinarily incorporated into polymer compositions of this type, with the proviso that the additive(s) are selected so as to not significantly adversely affect the desired properties of the thermoplastic composition, in particular heat resistance, impact, and flame retardance. Combinations of additives can be used. The additive composition can include an impact modifier, a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, an anti-drip agent, or a combination thereof. The additive composition can be present from 0.1-10 wt%, or 0.1-5 wt%, or 0.1-1 wt%, based on the total weight of the reinforced polycarbonate composition.

There is considerable overlap among plasticizers, lubricants, and mold release agents, which include, for example, phthalic acid esters (e.g., octyl-4,5-epoxy-hexahydrophthalate), tris-(octoxycarbonylethyl)isocyanurate, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g., C₁₋₃₂alkyl stearyl esters, such as methyl stearate and stearyl stearate and esters of stearic acid such as pentaerythritol tetrastearate, glycerol tristearate (GTS), and the like), waxes (e.g., beeswax, montan wax, paraffin wax, or the like), or combinations comprising at least one of the foregoing plasticizers, lubricants, and mold release agents. These are generally used in amounts of 0.01-5 wt%, based on the total weight of total weight of the reinforced polycarbonate composition, which sums to 100 wt%.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01-0.2, or 0.01-0.1 parts by weight, based on the total weight of the reinforced polycarbonate composition, which sums to 100 wt%.

The reinforced polycarbonate composition can be essentially free of chlorine and bromine. "Essentially free of chlorine and bromine" refers to materials produced without the intentional addition of chlorine or bromine or chlorine or bromine containing materials. It is understood however that in facilities that process multiple products a certain amount of cross contamination can occur resulting in bromine or chlorine levels typically on the parts per million by weight scale. With this understanding it can be readily appreciated that "essentially free of bromine and chlorine" can be defined as having a bromine or chlorine content of less than or equal to 100 parts per million by weight (ppm), less than or equal to 75 ppm, or less than or equal to 50 ppm. In some aspects, "essentially free of bromine and chlorine" means a total bromine and chlorine content of less than or equal to 100 parts per million by weight, or less than or equal to 75 ppm, or less than or equal to 50 ppm. When this definition is applied to the flame retardant it is based on the total weight of the flame retardant. When this definition is applied to the reinforced polycarbonate composition it is based on the total parts by weight of the reinforced polycarbonate composition.

In another aspect, the reinforced polycarbonate composition can be essentially free of chlorine, bromine, and fluorine. "Essentially free of chlorine, bromine, and fluorine" is defined as having a bromine, chlorine, or fluorine content of less than or equal to 100 ppm, less than or equal to 75 ppm, or less than or equal to 50 ppm, based on the total parts by weight of the composition. Preferably, the reinforced polycarbonate composition has a combined bromine, chlorine, and fluorine content of less than or equal to 100 ppm, less than or equal to 75 ppm, or less than or equal to 50 ppm, based on the total parts by weight of the composition.

The reinforced polycarbonate compositions can be manufactured by various methods. For example, powdered polycarbonates, flame retardant, or other optional components are first blended, optionally with fillers in a HENSCHEL-Mixer high speed mixer. Other low shear processes, including but not limited to hand mixing, can also accomplish this blending. The blend is then fed into the throat of a twin-screw extruder via a hopper. Alternatively, at least one of the components, for example the reinforcing filler, can be incorporated into the composition by feeding directly into the extruder at the throat or downstream through a sidefeeder. Additives or the fluoropolymer can also be compounded into a masterbatch with a desired polymer and fed into the extruder. The extruder is generally operated at a temperature higher than that necessary to cause the composition to flow.

After mixing, the composition so formed may be made into a particulate form, for example by pelletizing or grinding. For example, the molten mixture from an extruder may be fed into a die. Some non-limiting examples of suitable dies include an annular die, coat hanger die, spiral mandrel die, crosshead die, T-die, fishtail die, spider die, single, or double roller die, or profile extrusion die.

A molded sample of the reinforced polycarbonate composition can have a flame test rating of V0, as measured according to UL-94 at a thickness of 0.8 mm, or at a thickness of 0.6 mm, or at a thickness of 0.4 mm, or a combination thereof.

A molded sample of the reinforced polycarbonate composition can have a heat distortion temperature (HDT) of at least 120 °C as measured according to ISO 75 at 1.8 megapascal.

A molded sample of the reinforced polycarbonate composition can have a Vicat B120 softening temperature of at least 130 °C as measured according to ISO 306.

A molded sample of the reinforced polycarbonate composition can have a flexural modulus of at least 2000 megapascals (MPa), or at least 2,000 to 13,000 MPa, or at least 2,000 to 10,000 MPa, or at least 2,000 to 8,000 MPa, or at least 2,000 to 6,000 MPa, as measured according to ISO 178 on a 4 millimeter thick sample at a rate of 2 millimeter per minute.

Shaped, formed, or molded articles comprising the polycarbonate compositions are also provided. The polycarbonate compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermo formed article, a foamed article, a layer of a multi-layer article, a substrate for a coated article, or a substrate for a metallized article. In addition, the polycarbonate compositions can be used for such applications as a molded housing and other devices such as electrical circuit breakers and electrical connectors.

This disclosure is further illustrated by the following examples, which are non-limiting.

### EXAMPLES

The following components are used in the examples. Unless specifically indicated otherwise, the amount of each component is in wt% based on the total weight of the composition.

The materials shown in Table 1 were used.

**Table 1**

| Component | Description (Trade name) | Source |
|---|---|---|
| PC-Si | Poly(bisphenol A carbonate-dimethylsiloxane) copolymer produced via interfacial polymerization, 20 wt% siloxane, average siloxane block length = 45 units (D45), Mw = 29,000-31,000 g/mol as per GPC using polycarbonate standards, para-cumylphenol (PCP) end-capped, polydispersity = 2-3 | SABIC |
| PPPBP-BPA | Poly (N-phenyl phenolphthaleinyl bisphenol, 2,2-bis(4-hydro) carbonate-bisphenol A carbonate), 35 mol% PPPBP units; Mw = 25,000 g/mol determined via GPC using polystyrene standards; made by interfacial polymerization; PCP end-capped; PDI = 2-3 | SABIC |
| PC | Linear poly(bisphenol A carbonate); Mw = 20,000-22,000 g/mol determined via GPC using BPA homopolycarbonate standards; produced by interfacial polymerization | SABIC |
| FR | Phenoxycyclophosphazene, available as FP-110T, 13.4 wt% phosphorous | Fushimi |
| TSAN | Encapsulated Polytetrafluoroethylene, CAS Reg. No. 9002-84-0, having the tradename TSAN, with 47-53 wt% poly(tetrafluoroethylene) | SABIC |
| n-FP | 2 wt % encapsulated nanostructured fluoropolymer (n-structured TSAN), masterbatch in: linear poly(bisphenol A carbonate) (Mw = 20,000-22,000 g/mol determined via GPC using BPA homopolycarbonate standards; produced by interfacial polymerization) with a tan delta of 5-10 and a shear viscosity of 800 to 4000 Pa.s according to ISO 6721, manufactured as described in WO2018122747. | SABIC |
| PETS | Pentaerythritol tetrastearate, >90% esterified | Faci |
| GF | Chopped glass (aluminum-borosilicate) fiber, bonding (with sizing), diameter = 10 µm | Nippon Electric Glass |
| Phosphite | Tris(2,4-di-tert-butylphenyl) phosphite, available as IRGAFOS 168 | BASF |
| AO | Hindered phenolic antioxidant, available as IRGANOX 1076 | BASF |

The testing samples were prepared as described below and the following test methods were used.

All powder additives were combined together with the polycarbonate powder(s), using a paint shaker, and fed through one feeder to an extruder. Extrusion for all combinations was performed on a 25 mm twin screw extruder, using a melt temperature of 270-320 °C and 300 revolutions per minute (rpm), then pelleted. The glass fibers were fed separately through the hopper on a downstream side-feeder. The pellets were dried for 3-5 hours at 90-100 °C. Dried pellets were injection molded at temperatures of 260-315 °C to form specimens for most of the tests below.

Flexural strength and flexural modulus were determined according to ISO 178 on 4 mm-thick ISO bars at a rate of 2 mm per minute.

Heat distortion temperatures were measured in accordance with the ISO-75 standard, using the flat side of 4 mm-thick ISO bars and a load of 1.8 MPa (A/f) and a load of 0.45 MPa (A/f).

Vicat softening temperatures were measured on 4 mm-thick ISO bars in accordance with the ISO 306 standard at a load of 50 N and a speed of 120 °C per hour (B120).

Flammability tests were performed on conditioned samples (23 °C, 48 h, then 70 °C, 168 h) at a thickness of 0.8 mm and 0.4 mm in accordance with the Underwriter's Laboratory (UL) UL 94 standard. In some cases, a second set of 5 bars was tested to give an indication of the robustness of the rating. In this report the following definitions are used as shown in Table 2. Total flame-out-times for all 5 bars (FOT = t1 + t2) were determined. V-ratings were obtained for every set of 5 bars.

**Table 2**

| | t₁ or t₂ | 5-bar FOT | burning drips |
|---|---|---|---|
| V0 | <10 | <50 | no |
| V1 | <30 | <250 | No |
| V2 | <30 | <250 | Yes |
| N.R. (no rating) | >30 | >250 | |

### Examples 1-2

The formulations and properties of Examples 1-2 are shown in Table 3.

**Table 3.**

| Component | Unit | 1^{∗} | 2 |
|---|---|---|---|
| PC | Wt% | 37.1 | 27.3 |
| PC-Si | Wt% | 16 | 16 |
| PPPBP-BPA | Wt% | 30 | 30 |
| PETS | Wt% | 0.5 | 0.5 |
| AO | Wt% | 0.1 | 0.1 |
| Stab | Wt% | 0.1 | 0.1 |
| TSAN | Wt% | 0.2 | |
| n-FP | Wt% | | 10 |
| FR | Wt% | 6 | 6 |
| GF | Wt% | 10 | 10 |

| Properties | | | |
|---|---|---|---|
| % Phosphorous | Wt% | 0.8 | 0.8 |
| Flexural Strength | MPa | 128 | 128 |
| Flexural Modulus | MPa | 4000 | 3980 |
| HDT, 0.45 MPa | °C | 140 | 141 |
| HDT, 1.82 MPa | °C | 132 | 133 |
| Vicat, B/120 | °C | 142 | 141 |
| UL 94, 0.8 mm, conditioned | | V0 | V0 |
| UL 94, 0.4 mm, conditioned | | V2 | V0 |

### ^{∗}Comparative Example

Comparative Example 1 wherein TSAN was the anti-drip agent resulted in a UL 94 rating of V0 at a thickness of 0.8 mm; however, the UL 94 rating at a thickness of 0.4 mm was V2. Example 2, which has the same overall fluorine content as Comparative Example 1, shows that a molded sample of a composition with nanostructured fluoropolymer as the anti-drip agent has a UL 94 rating of V0 at thicknesses of 0.8 mm and 0.4 mm. In a further advantage, the samples maintain desirable mechanical and thermal properties.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects," "an aspect," and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH2-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A reinforced polycarbonate composition comprising:
10-90 wt% of a polycarbonate component comprising
a homopolycarbonate having a weight average molecular weight from 15,000-40,000 grams/mole, as measured via gel permeation chromatography using bisphenol A homopolycarbonate standards;
a high heat copolycarbonate having a glass transition temperature of 170 °C or higher determined per ASTM D3418 with a 20 °C per minute heating rate;
or a combination thereof;
5-45 wt% of a poly(carbonate-siloxane);
0.001-1.0 wt% of a nanostructured fluoropolymer;
5-45 wt% of a reinforcing fiber, preferably glass fibers;
an organophosphorus flame retardant present in an amount effective to provide 0.1-1.5 wt% of added phosphorous, based on the total weight of the flame retardant;
optionally, 0.1-10.0 wt% of an additive composition,
wherein each amount is based on the total weight of the reinforced polycarbonate composition, which sums to 100 wt%,
wherein a molded sample of the reinforced polycarbonate composition has
a UL 94 rating of V0 at a thickness of 0.8 mm, or at a thickness of 0.6 mm, or at a thickness of 0.4 mm, and
a heat distortion temperature of at least 120 °C as measured according to the ISO-75 standard at 1.8 megapascal.

2. The reinforced polycarbonate composition of any one of the preceding claims, wherein
the high heat copolycarbonate is present and comprises high heat aromatic carbonate units derived from 1,1-bis(4-hydroxyphenyl)-3,3,5-trimethyl-cyclohexane, N-phenyl phenolphthalein bisphenol, 4,4-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a, 10b-diphenyl-coumarano-2',3',2,3-coumarane, or a combination thereof, preferably 1,1-bis(4-hydroxyphenyl)-3,3,5-trimethyl-cyclohexane, N-phenyl phenolphthalein bisphenol, or a combination thereof; and
optionally, low heat aromatic carbonate units, preferably bisphenol A carbonate units.

3. The reinforced polycarbonate composition of any one of the preceding claims, wherein low heat aromatic carbonate units are present and comprise bisphenol A carbonate units.

4. The reinforced polycarbonate composition of any one of the preceding claims, wherein the high heat copolycarbonate is present and comprises poly(carbonate-bisphenol phthalate ester) having the formula 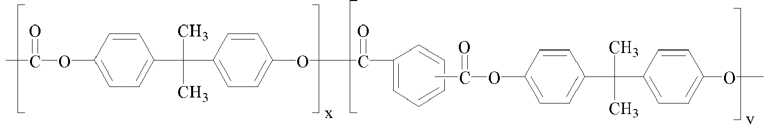 wherein
the weight ratio of carbonate units x to ester units y is or 10:90-45:55, and
the ester units have a molar ratio of isophthalate to terephthalate from 98:2-88:12.

5. The reinforced polycarbonate composition of any one of the preceding claims,
wherein the poly(carbonate-siloxane) comprises 50-99 wt% of bisphenol A carbonate units and 1-50 wt% of dimethylsiloxane units, each based on the weight of the poly(carbonate-siloxane),
preferably wherein the poly(carbonate-siloxane) comprises siloxane units of the formulas 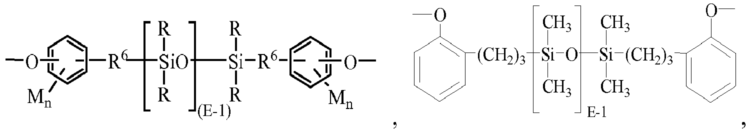 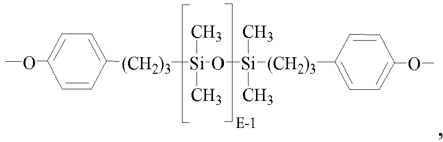 or a combination thereof, wherein E has an average value of 2-200, or 2-125, or 5-125, or 5-100, or 5-50, or 20-80, or 5-20.

6. The reinforced polycarbonate composition of any one of the preceding claims, wherein the organophosphorus flame retardant is a phosphazene, phosphate, phosphite, phosphonate, phosphinate, phosphine oxide, phosphine, or a combination thereof, preferably comprising an aromatic group.

7. The reinforced polycarbonate composition of any one of the preceding claims, wherein the organophosphorus flame retardant is a phosphazene formula 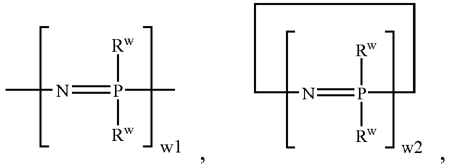 or a combination thereof, wherein w1 is 3-10,000, w2 is 3-25, preferably 3-7, and each R^{w} is independently a C₁₋₁₂ alkyl, C₂₋₁₂ alkenyl, C₁₋₁₂ alkoxy, C₆₋₁₂ aryl, C₆₋₁₂ aryloxy, or polyoxy(C₁₋₆ alkylene) group.

8. The reinforced polycarbonate composition of any one of the preceding claims, wherein the organophosphorus flame retardant has the formula 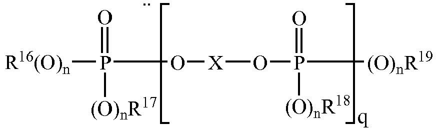 wherein
R¹⁶, R¹⁷, R¹⁸ and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, and
X is a mono- or poly-nuclear aromatic C₆₋₃₀ moiety or a linear or branched C₂₋₃₀ aliphatic radical, each optionally hydroxy-substituted and optionally up to 8 ether bonds,
provided that at least one of R¹⁶, R¹⁷, R¹⁸, R¹⁹, and X is aromatic,
n is each independently 0 or 1, and
q is from 0.5-30, and
preferably wherein each of R¹⁶, R¹⁷, R¹⁸, and R¹⁹ is phenyl, X is of the formula 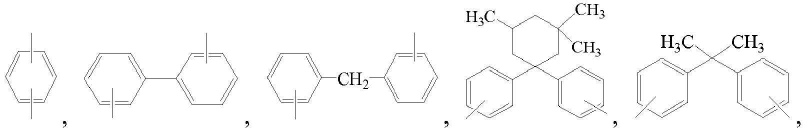 or a
combination thereof, each n is 1, and q is 1-5.

9. The reinforced polycarbonate composition of any one of the preceding claims, wherein the additive composition is present and comprises an impact modifier, a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, an anti-drip agent different from the nanostructured fluoropolymer, or a combination thereof.

10. The reinforced polycarbonate composition of any one of the preceding claims, wherein the reinforced polycarbonate composition is substantially free of a non-nanostructured fluoropolymer encapsulated by an encapsulating polymer, preferably substantially free of a styrene-acrylonitrile encapsulated non-nanostructured poly(tetrafluoroethylene).

11. The reinforced polycarbonate composition of any one of the preceding claims, wherein a molded sample has
a Vicat softening temperature of at least 130 °C as measured according to the ISO-306 standard;
a flexural modulus of at least 2000 megapascals as measured according to ISO 178 on a 4 millimeter thick sample at a rate of 2 millimeter per minute; and
wherein the composition has a bromine or chlorine content, or a combined bromine and chlorine content of less than or equal to 100 parts per million by weight, less than or equal to 75 parts per million by weight, or less than or equal to 50 parts per million by weight, each based on the total parts by weight of the composition; or
wherein the composition has a bromine chlorine or fluorine content, or a combined bromine, chlorine, and fluorine content of less than or equal to 100 parts per million by weight, less than or equal to 75 parts per million by weight, or less than or equal to 50 parts per million by weight, each based on the total parts by weight of the composition.

12. The reinforced polycarbonate composition of any one of the preceding claims comprising:
30-60 wt% of the homopolycarbonate having a weight average molecular weight from 20,000 to 25,000 grams/mole, as measured via gel permeation chromatography using bisphenol A homopolycarbonate standards;
10-40 wt% of the high heat copolycarbonate, wherein the high heat copolycarbonate comprises units derived from 1,1-bis(4-hydroxyphenyl)-3,3,5-trimethyl-cyclohexane, N-phenyl phenolphthalein bisphenol, or a combination thereof;
5-30 wt% of the poly(carbonate-dimethylsiloxane);
0.001-1.0 wt%, of the nanostructured fluoropolymer;
5-30 wt% of glass fibers as the reinforcing fiber;
a phosphazene as the organophosphorus flame retardant, present in an amount effective to provide 0.7-0.9 wt% of added phosphorous, based on the total weight of the flame retardant;
optionally, 0.1-10 wt% of the additive composition,
wherein each amount is based on the total weight of the reinforced polycarbonate composition, which sums to 100 wt%.

13. The reinforced polycarbonate composition of any one of the preceding claims comprising:
10-90 wt% of a homopolycarbonate having a weight average molecular weight from 15,000-40,000 grams/mole, as measured via gel permeation chromatography using bisphenol A homopolycarbonate standards;
5-30 wt% of a poly(carbonate-siloxane);
0.001-1.0 wt% of the nanostructured fluoropolymer;
5-30 wt% of a reinforcing fiber, preferably glass fibers;
an organophosphorus flame retardant present in an amount effective to provide 0.1-1.5 wt% of added phosphorous, based on the total weight of the flame retardant;
optionally, 0.1-10.0 wt% of an additive composition,
wherein each amount is based on the total weight of the reinforced polycarbonate composition, which sums to 100 wt%,
wherein a molded sample of the reinforced polycarbonate composition has
a UL 94 rating of V0 at a thickness of 0.8 mm, or at a thickness of 0.6 mm, or at a thickness of 0.4 mm, and
a heat distortion temperature of at least 120 °C as measured according to the ISO-75 standard at 1.8 megapascal.

14. An article comprising the reinforced polycarbonate composition of any one of the preceding claims, wherein the article is an electrical component, preferably a circuit breaker or an electrical connector.

15. A method for forming the article according to claim 14, comprising molding, casting, or extruding the reinforced polycarbonate composition to provide the article.

## Patentansprüche

1. Verstärkte Polycarbonatzusammensetzung, umfassend:
10-90 Gew.-% einer Polycarbonatkomponente, umfassend ein Homopolycarbonat, das ein Massenmittel von 15.000-40.000 Gramm/Mol aufweist, wie über Gelpermeationschromatographie unter Verwendung von Bisphenol-A-Homopolycarbonat-Standards gemessen;
ein Hochtemperaturcopolycarbonat, das eine Glasübergangstemperatur von 170 °C oder höher aufweist, gemäß ASTM D3418 mit einer Erwärmungsgeschwindigkeit von 20 °C pro Minute bestimmt;
oder eine Kombination davon;
5-45 Gew.-% eines Poly(carbonatsiloxans);
0,001-1,0 Gew.-% eines nanostrukturierten Fluorpolymers;
5-45 Gew.-% einer Verstärkungsfaser, vorzugsweise Glasfasern;
ein Organophosphorflammschutzmittel, das in einer wirksamen Menge vorhanden ist, um 0,1-1,5 Gew.-% zugesetzten Phosphor bereitzustellen, basierend auf dem Gesamtgewicht des Flammschutzmittels;
optional 0,1-10,0 Gew.-% einer Zusatzzusammensetzung,
wobei jede Menge auf dem Gesamtgewicht der verstärkten Polycarbonatzusammensetzung basiert, das sich auf 100 Gew.-% summiert,
wobei eine geformte Probe der verstärkten Polycarbonatzusammensetzung aufweist:
eine UL-94-Bewertung von V0 bei einer Dicke von 0,8 mm oder bei einer Dicke von 0,6 mm oder bei einer Dicke von 0,4 mm und
eine Wärmeformbeständigkeit von wenigstens 120 °C, wie nach dem ISO-Standard 75 bei 1,8 Megapascal gemessen.

2. Verstärkte Polycarbonatzusammensetzung nach einem der vorhergehenden Ansprüche, wobei
das Hochtemperaturcopolycarbonat vorhanden ist und aromatische Hochtemperaturcarbonateinheiten umfasst, die von 1,1-Bis(4-hydroxyphenyl)-3,3,5-trimethylcyclohexan, N-Phenylphenolphthaleinbisphenol, 4,4'-(1-Phenylethyliden)bisphenol, 4,4'-(3,3-Dimethyl-2,2-dihydro-1H-inden-1,1-diyl)diphenol, 1,1-Bis(4-hydroxyphenyl)cyclododecan, 3,8- Dihydroxy-5a,10b-diphenyl-cumarano-2',3',2,3-cumaran, oder einer Kombination davon, vorzugsweise 1,1 -Bis(4-hydroxyphenyl)-3,3,5-trimethyl-cyclohexan, N-Phenylphenolphthaleinbisphenol oder einer Kombination davon abstammen; und
optional aromatische Carbonateinheiten mit geringer Wärmeentwicklung, vorzugsweise Bisphenol-A-Carbonateinheiten.

3. Verstärkte Polycarbonatzusammensetzung nach einem der vorhergehenden Ansprüche, wobei aromatische Carbonateinheiten mit geringer Wärmeentwicklung vorhanden sind und Bisphenol-A-Carbonateinheiten umfassen.

4. Verstärkte Polycarbonatzusammensetzung nach einem der vorhergehenden Ansprüche, wobei das Hochtemperaturcopolycarbonat vorhanden ist und Poly(carbonatbisphenolphthalatester) umfasst, der die folgende Formel aufweist: 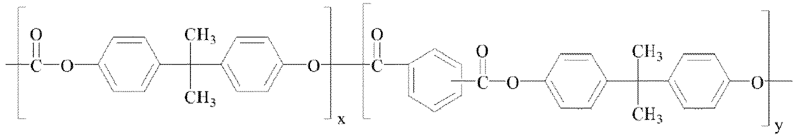 wobei
das Gewichtsverhältnis von Carbonateinheiten x zu Estereinheiten y 10 : 90-45 : 55 beträgt, und
die Estereinheiten ein Molverhältnis von Isophthalat zu Terephthalat von 98 : 2-88 : 12 aufweisen.

5. Verstärkte Polycarbonatzusammensetzung nach einem der vorhergehenden Ansprüche,
wobei das Poly(carbonatsiloxan) 50-99 Gew.-% Bisphenol-A-Carbonateinheiten und 1-50 Gew.-% Dimethylsiloxaneinheiten umfasst, jeweils basierend auf dem Gewicht des Poly(carbonatsiloxans),
vorzugsweise wobei das Poly(carbonatsiloxan) Siloxaneinheiten der folgenden Formeln 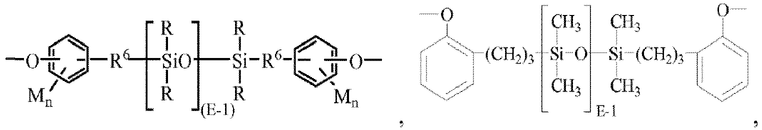 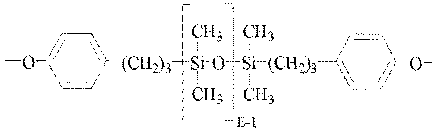 oder einer Kombination davon umfasst, wobei E einen Durchschnittswert von 2-200 oder 2-125 oder 5-125 oder 5-100 oder 5-50 oder 20-80 oder 5-20 aufweist.

6. Verstärkte Polycarbonatzusammensetzung nach einem der vorhergehenden Ansprüche, wobei das Organophosphorflammschutzmittel ein Phosphazen, ein Phosphat, ein Phosphit, ein Phosphonat, ein Phosphinat, ein Phosphinoxid, ein Phosphin oder eine Kombination davon ist, vorzugsweise eine aromatische Gruppe umfassend.

7. Verstärkte Polycarbonatzusammensetzung nach einem der vorhergehenden Ansprüche, wobei das Organophosphorflammschutzmittel eine Phosphazenformel 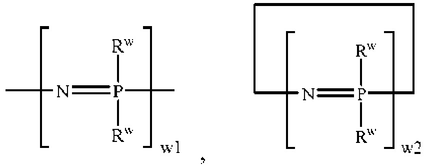 oder eine Kombination davon ist, wobei w1 3-10.000 ist, w2 3-25, vorzugsweise 3-7 ist, und jedes R^{w} unabhängig eine C₁₋₁₂-Alkyl-, eine C₂₋₁₂-Alkenyl-, eine C₁₋₁₂-Alkoxy-, eine C₆₋₁₂-Aryl-, eine C₆₋₁₂-Aryloxy- oder eine Polyoxy(C₁₋₆-alkylen)-Gruppe ist.

8. Verstärkte Polycarbonatzusammensetzung nach einem der vorhergehenden Ansprüche, wobei das Organophosphorflammschutzmittel die Formel aufweist: 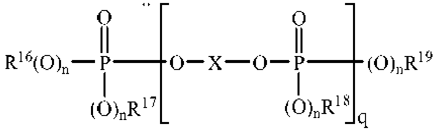 wobei
R¹⁶, R¹⁷, R¹⁸ und R¹⁹ jeweils unabhängig C₁₋₈-Alkyl, C₅₋₆-Cycloalkyl, C₆₋₂₀-Aryl oder C₇₋₁₂-Arylalkylen sind, jeweils optional durch C₁₋₁₂-Alkyl substituiert, und
X ein ein- oder mehrkerniger aromatischer C ₆₋₃₀-Molekülteil oder ein linearer oder verzweigter aliphatischer C₂₋₃₀-Rest ist, jeweils optional hydroxysubstituiert und optional bis zu 8 Etherbindungen,
vorausgesetzt, dass wenigstens eines von R¹⁶, R¹⁷, R¹⁸, R¹⁹ und X aromatisch ist,
n jeweils unabhängig 0 oder 1 ist, und
q von 0,5-30 ist, und
vorzugsweise wobei jedes von R¹⁶, R¹⁷, R¹⁸ und R¹⁹ Phenyl ist, X die folgende Formel 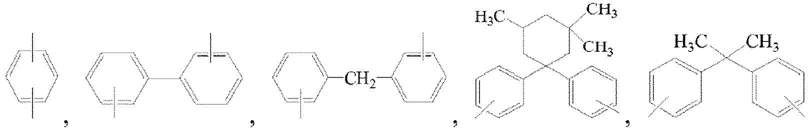 oder eine Kombination davon aufweist, wobei jedes n 1 ist und q 1-5 ist.

9. Verstärkte Polycarbonatzusammensetzung nach einem der vorhergehenden Ansprüche, wobei die Zusatzzusammensetzung vorhanden ist und einen Schlagmodifizierer, einen Flussmodifizierer, ein Antioxidans, einen Wärmestabilisator, einen Lichtstabilisator, einen Ultraviolettlichtstabilisator, einen ultraviolettabsorbierenden Zusatz, einen Weichmacher, ein Schmiermittel, ein Trennmittel, ein antistatisches Mittel, ein Antibeschlagmittel, ein antimikrobielles Mittel, ein Färbemittel, einen Oberflächenwirkungszusatz, einen Strahlungsstabilisator, ein Antitropfmittel, das sich von dem nanostrukturierten Fluorpolymer unterscheidet, oder eine Kombination davon umfasst.

10. Verstärkte Polycarbonatzusammensetzung nach einem der vorhergehenden Ansprüche, wobei die verstärkte Polycarbonatzusammensetzung im Wesentlichen frei von einem nicht nanostrukturierten Fluorpolymer, das durch ein einkapselndes Polymer eingekapselt ist, vorzugsweise im Wesentlichen frei von einem mit Styrolacrylnitril eingekapselten, nicht nanostrukturierten Poly(tetrafluorethylen) ist.

11. Verstärkte Polycarbonatzusammensetzung nach einem der vorhergehenden Ansprüche, wobei eine geformte Probe aufweist:
eine Vicat-Erweichungstemperatur von wenigstens 130 °C, wie gemäß dem ISO-Standard 306 gemessen;
eine Biegemodul von wenigstens 2000 Megapascal, wie gemäß ISO 178 an einer 4 Millimeter dicken Probe bei einer Geschwindigkeit von 2 Millimeter pro Minute gemessen; und
wobei die Zusammensetzung einen Brom- oder Chlorgehalt oder einen kombinierten Brom- und Chlorgehalt von weniger als oder gleich 100 Gewichtsteilen pro Million, weniger als oder gleich 75 Gewichtsteilen pro Million oder weniger als oder gleich 50 Gewichtsteilen pro Million aufweist, jeweils basierend auf den Gesamtgewichtsteilen der Zusammensetzung; oder
wobei die Zusammensetzung einen Brom-, Chlor- oder Fluorgehalt oder einen kombinierten Brom-, Chlor- und Fluorgehalt von weniger als oder gleich 100 Gewichtsteilen pro Million, weniger als oder gleich 75 Gewichtsteilen pro Million oder weniger als oder gleich 50 Gewichtsteilen pro Million aufweist, jeweils basierend auf den Gesamtgewichtsteilen der Zusammensetzung.

12. Verstärkte Polycarbonatzusammensetzung nach einem der vorhergehenden Ansprüche, umfassend:
30-60 Gew.-% des Homopolycarbonats, das ein Massenmittel von 20.000 bis 25.000 Gramm/Mol aufweist, wie über Gelpermeationschromatographie unter Verwendung von Bisphenol-A-Homopolycarbonatstandards gemessen;
10-40 Gew.-% des Hochtemperaturcopolycarbonats, wobei das Hochtemperaturcopolycarbonat Einheiten umfasst, die von 1,1-Bis(4-hydroxyphenyl)-3,3,5-trimethylcyclohexan, N-Phenylphenolphthaleinbisphenol oder einer Kombination davon abstammen;
5-30 Gew.-% des Poly(carbonatdimethylsiloxans);
0,001-1,0 Gew.-% des nanostrukturierten Fluorpolymers;
5-30 Gew.-% Glasfasern als die Verstärkungsfaser;
ein Phosphazen als das Organophosphorflammschutzmittel, das in einer wirksamen Menge vorhanden ist, um 0,7-0,9 Gew.-% zugesetzten Phosphor bereitzustellen, basierend auf dem Gesamtgewicht des Flammschutzmittels;
optional 0,1-10 Gew.-% der Zusatzzusammensetzung,
wobei jede Menge auf dem Gesamtgewicht der verstärkten Polycarbonatzusammensetzung basiert, das sich auf 100 Gew.-% summiert.

13. Verstärkte Polycarbonatzusammensetzung nach einem der vorhergehenden Ansprüche, umfassend:
10-90 Gew.-% eines Homopolycarbonats, das ein Massenmittel von 15.000-40.000 Gramm/Mol aufweist, wie über Gelpermeationschromatographie unter Verwendung von Bisphenol-A-Homopolycarbonatstandards gemessen;
5-30 Gew.-% eines Poly(carbonatsiloxans);
0,001-1,0 Gew.-% des nanostrukturierten Fluorpolymers;
5-30 Gew.-% einer Verstärkungsfaser, vorzugsweise Glasfasern;
ein Organophosphorflammschutzmittel, das in einer wirksamen Menge vorhanden ist, um 0,1-1,5 Gew.-% zugesetzten Phosphor bereitzustellen, basierend auf dem Gesamtgewicht des Flammschutzmittels;
optional 0,1-10,0 Gew.-% einer Zusatzzusammensetzung,
wobei jede Menge auf dem Gesamtgewicht der verstärkten Polycarbonatzusammensetzung basiert, das sich auf 100 Gew.-% summiert,
wobei eine geformte Probe der verstärkten Polycarbonatzusammensetzung aufweist:
eine UL-94-Bewertung von V0 bei einer Dicke von 0,8 mm oder bei einer Dicke von 0,6 mm oder bei einer Dicke von 0,4 mm und
eine Wärmeformbeständigkeit von wenigstens 120 °C, wie nach dem ISO-Standard 75 bei 1,8 Megapascal gemessen.

14. Erzeugnis, das die verstärkte Polycarbonatzusammensetzung nach einem der vorhergehenden Ansprüche umfasst, wobei das Erzeugnis eine elektrische Komponente, vorzugsweise ein Leistungsschalter oder ein elektrischer Verbinder ist.

15. Verfahren zum Ausbilden des Erzeugnisses nach Anspruch 14, das ein Formen, ein Gießen oder ein Extrudieren der verstärkten Polycarbonatzusammensetzung umfasst, um das Erzeugnis bereitzustellen.

## Revendications

1. Composition de polycarbonate renforcée comprenant :
10 à 90 % en poids d'un composant polycarbonate comprenant un homopolycarbonate ayant une masse moléculaire moyenne en masse de 15 000 à 40 000 grammes/mole, telle que mesurée par chromatographie par perméation de gel utilisant des étalons en homopolycarbonate de bisphénol A ;
un copolycarbonate ayant une forte résistance à la chaleur ayant une température de transition vitreuse de 170 °C ou plus, déterminée conformément à la norme ASTM D3418 à une vitesse de montée en température de 20 °C par minute ;
ou une de leurs combinaisons ;
5 à 45 % en poids d'un poly(carbonate-siloxane) ;
0,001 à 1,0 % en poids d'un polymère fluoré nanostructuré ;
5 à 45 % en poids de fibres de renforcement, de préférence de fibres de verre ;
un retardateur de flamme organo-phosphoré présent en une quantité efficace pour fournir 0,1 à 1,5 % en poids de phosphore ajouté, par rapport au poids total du retardateur de flamme;
éventuellement 0,1 à 10,0 % en poids d'une composition d'additifs,
dans laquelle chaque quantité est basée sur le poids total de la composition de polycarbonate renforcée, qui correspond à 100 %,
dans laquelle un échantillon moulé de la composition de polycarbonate renforcée a une note UL94 de V0 pour une épaisseur de 0,8 mm, ou pour une épaisseur de 0,6 mm, ou pour une épaisseur de 0,4 mm, et
une température de distorsion à la chaleur d'au moins 120 °C, telle que mesurée conformément à la norme ISO-75 sous 1,8 mégapascals.

2. Composition de polycarbonate renforcée selon la revendication précédente, dans laquelle
le copolycarbonate ayant une forte résistance à la chaleur est présent et comprend des motifs carbonate aromatique ayant une forte résistance à la chaleur dérivés de 1,1-bis(4-hydroxyphényl)-3,3,5-triméthyl-cyclohexane, N-phényl-phénolphthaléine-bisphénol, 4,4'-(1-phényléthylidène)bisphénol, 4,4'-(3,3-diméthyl-2,2-dihydro-1H-indène-1,1-diyl)diphénol, 1,1-bis(4-hydroxyphényl)cyclododécane, 3,8-dihydroxy-5a,10b-diphényl-coumarano-2',3',2,3-coumarane, ou une de leurs combinaisons, de préférence de 1,1-bis(4-hydroxyphényl)-3,3,5-triméthyl-cyclohexane, N-phényl-phénolphthaléine-bisphénol, ou une de leurs combinaisons ; et
éventuellement des motifs carbonate aromatique ayant une faible résistance à la chaleur, de préférence des motifs carbonate de bisphénol A.

3. Composition de polycarbonate renforcée selon l'une quelconque des revendications précédentes, dans laquelle les motifs carbonate aromatique ayant une faible résistance à la chaleur sont présents et comprennent des motifs carbonate de bisphénol A.

4. Composition de polycarbonate renforcée selon l'une quelconque des revendications précédentes, dans laquelle le copolycarbonate ayant une forte résistance à la chaleur est présent et comprend un poly(carbonate-ester phtalate de bisphénol) de formule 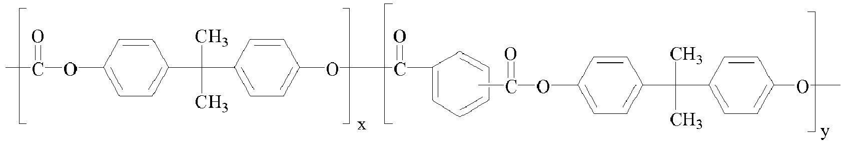 dans laquelle
le rapport en poids des motifs carbonate x aux motifs ester y est de 10/90 à 45/55, et
les motifs ester ont un rapport molaire de l'isophtalate au téréphtalate de 98/2 à 88/12.

5. Composition de polycarbonate renforcée selon l'une quelconque des revendications précédentes, dans laquelle le poly(carbonate-siloxane) comprend 50 à 99 % en poids de motifs carbonate de bisphénol A et 1 à 50 % en poids de motifs diméthylsiloxane, pour chacun par rapport au poids du poly(carbonate-siloxane),
de préférence dans laquelle le poly(carbonate-siloxane) comprend des motifs siloxane de formules 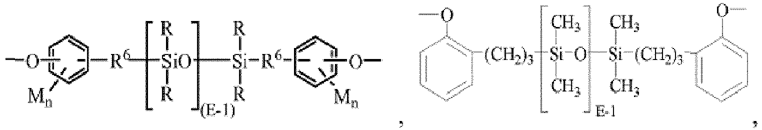 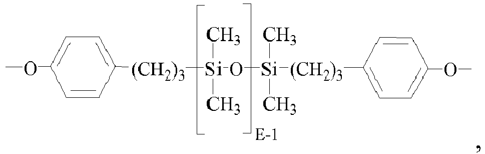 ou une de leurs combinaisons, dans lesquelles E vaut en moyenne de 2 à 200, ou de 2 à 125, ou de 5 à 125, ou de 5 à 100, ou de 5 à 50, ou de 20 à 80, ou de 5 à 20.

6. Composition de polycarbonate renforcée selon l'une quelconque des revendications précédentes, dans laquelle le retardateur de flamme organo-phosphoré est un phosphazène, phosphate, phosphite, phosphonate, phosphinate, oxyde de phosphine, phosphine, ou une de leurs combinaisons, de préférence comprenant un groupe aromatique.

7. Composition de polycarbonate renforcée selon l'une quelconque des revendications précédentes, dans laquelle le retardateur de flamme organo-phosphoré est un phosphazène de formule 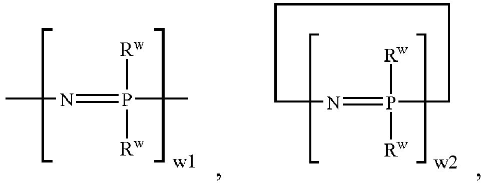 ou une de leurs combinaisons, dans laquelle w1 vaut de 3 à 10 000, w2 vaut de 3 à 25, de préférence de 3 à 7, et chaque R^{w} est indépendamment un groupe alkyle en C₁ à C₁₂, alcényle en C₂ à C₁₂, alcoxy en C₁ à C₁₂, aryle en C₆ à C₁₂, aryloxy en C₆ à C₁₂, ou polyoxy(alkylène en C₁ à C₆).

8. Composition de polycarbonate renforcée selon l'une quelconque des revendications précédentes, dans laquelle le retardateur de flamme organo-phosphoré répond à la formule 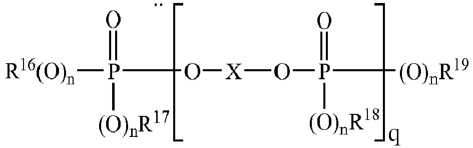 dans laquelle
chacun de R¹⁶, R¹⁷, R¹⁸ et R¹⁹ est indépendamment un alkyle en C₁ à C₈, cycloalkyle en C₅ à C₆, aryle en C₆ à C₂₀, ou arylalkylène en C₇ à C₁₂, chacun éventuellement substitué par alkyle en C₁ à C₁₂, et
X est un fragment en C₆ à C₃₀ aromatique mono- ou poly-nucléaire ou un radical aliphatique en C₂ à C₃₀ linéaire ou ramifié, chacun éventuellement substitué par hydroxy et portant éventuellement jusqu'à 8 liaisons éther,
sous réserve qu'au moins l'un parmi R¹⁶, R¹⁷, R¹⁸, R¹⁹ et X soit aromatique,
chaque n vaut indépendamment 0 ou 1, et
q vaut de 0,5 à 30, et
de préférence dans laquelle chacun de R¹⁶, R¹⁷, R¹⁸ et R¹⁹ est phényle, X répond à la formule 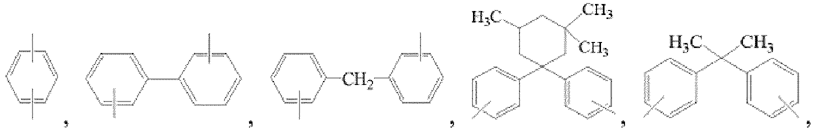
ou une de leurs combinaisons, chaque n vaut 1, et q vaut de 1 à 5.

9. Composition de polycarbonate renforcée selon l'une quelconque des revendications précédentes, dans laquelle la composition d'additifs est présente et comprend un modifiant choc, un modificateur d'écoulement, un antioxydant, un stabilisant à la chaleur, un stabilisant à la lumière, un stabilisant à la lumière ultraviolette, un additif absorbant les ultraviolets, un plastifiant, un lubrifiant, un agent de démoulage, un agent antistatique, un agent antivoile, un agent antimicrobien, un colorant, un additif à effet de surface, un stabilisant aux radiations, un agent anti-goutte différent du polymère fluoré nanostructuré, ou une de leurs combinaisons.

10. Composition de polycarbonate renforcée selon l'une quelconque des revendications précédentes, laquelle composition de polycarbonate renforcée est pratiquement exempte de polymère fluoré non nanostructuré encapsulé par un polymère d'encapsulation, de préférence substantiellement exempte de polytétrafluoroéthylène non nanostructuré encapsulé dans du styrène-acrylonitrile.

11. Composition de polycarbonate renforcée selon l'une quelconque des revendications précédentes, dans laquelle un échantillon moulé a
un point de ramollissement Vicat d'au moins 130 °C, tel que mesuré conformément à la norme ISO-306 ;
un module de flexion d'au moins 2 000 mégapascals, tel que mesuré conformément à la norme ISO 178 sur un échantillon ayant une épaisseur de 4 millimètres à une vitesse de 2 millimètres par minute ; et
laquelle composition a une teneur en brome ou chlore, ou une teneur combinée en brome et chlore, inférieure ou égale à 100 parties par million en poids, inférieure ou égale à 75 parties par million en poids, ou inférieure ou égale à 50 parties par million en poids, à chaque fois sur la base des parties en poids totale de la composition ; ou
laquelle composition a une teneur en brome, chlore ou fluor, ou une teneur combinée en brome, chlore et fluor, inférieure ou égale à 100 parties par million en poids, inférieure ou égale à 75 parties par million en poids, ou inférieure ou égale à 50 parties par million en poids, à chaque fois sur la base des parties en poids totale de la composition.

12. Composition de polycarbonate renforcée selon l'une quelconque des revendications précédentes, comprenant :
30 à 60 % en poids de l'homopolycarbonate ayant une masse moléculaire moyenne en masse de 20 000 à 25 000 grammes/mole, telle que mesurée par chromatographie à perméation de gel utilisant des étalons en homopolycarbonate de bisphénol A ;
10 à 40 % en poids du copolycarbonate ayant une forte résistance à la chaleur, lequel copolycarbonate ayant une forte résistance à la chaleur, comprend des motifs dérivés de 1,1-bis(4-hydroxyphényl)-3,3,5-triméthyl-cyclohexane, N-phényl-phénolphtaléine-bisphénol, ou une de leurs combinaisons ;
5 à 30 % en poids du poly(carbonate-diméthylsiloxane) ;
0,001 à 1,0 % en poids du polymère fluoré nanostructuré ;
5 à 30 % en poids de fibres de verre en tant que fibres de renforcement ;
un phosphazène en tant que retardateur de flamme organo-phosphoré, présent en une quantité efficace pour fournir 0,7 à 0,9 % en poids de phosphore ajouté, par rapport au poids total du retardateur de flamme ;
éventuellement 0,1 à 10 % en poids de la composition d'additifs,
dans laquelle chaque quantité est basée sur le poids total de la composition de polycarbonate renforcée, qui correspond à 100 %.

13. Composition de polycarbonate renforcée selon l'une quelconque des revendications précédentes, comprenant :
10 à 90 % en poids d'un homopolycarbonate ayant une masse moléculaire moyenne en masse de 15 000 à 40 000 grammes/mole, telle que mesurée par chromatographie à perméation de gel utilisant des étalons en homopolycarbonate de bisphénol A ;
5 à 30 % en poids d'un poly(carbonate-siloxane) ;
0,001 à 1,0 % en poids du polymère fluoré nanostructuré ;
5 à 30 % en poids de fibres de renforcement, de préférence de fibres de verre ;
un retardateur de flamme organo-phosphoré présent en une quantité efficace pour fournir 0,1 à 1,5 % en poids de phosphore ajouté, par rapport au poids total du retardateur de flamme ;
éventuellement 0,1 à 10 % en poids d'une composition d'additifs,
dans laquelle chaque quantité est basée sur le poids total de la composition de polycarbonate renforcée, qui correspond à 100 %,
dans laquelle un échantillon moulé de la composition de polycarbonate renforcée a une note UL94 de V0 pour une épaisseur de 0,8 mm, ou pour une épaisseur de 0,6 mm, ou pour une épaisseur de 0,4 mm, et
une température de distorsion à la chaleur d'au moins 120 °C, telle que mesurée conformément à la norme ISO-75 sous 1,8 mégapascals.

14. Article comprenant la composition de polycarbonate renforcée selon l'une quelconque des revendications précédentes, lequel article est un composant électrique, de préférence un disjoncteur ou un connecteur électrique.

15. Méthode pour former l'article selon la revendication 14, comprenant le moulage, la coulée ou l'extrusion de la composition de polycarbonate renforcée pour former l'article.
